# EUROPÄISCHE PATENTSCHRIFT

(11) **EP 3 814 664 B1**
(45) Veröffentlichungstag und Bekanntmachung des Hinweises auf die Patenterteilung: **06.08.2025**
(21) Anmeldenummer: 19736327.8
(22) Anmeldetag: 27.06.2019
(51) Int. Cl.: F16L 13/02, F16L 58/10, A62C 35/68

(54) **VERFAHREN ZUR HERSTELLUNG EINER ANZAHL VON ROHREN MIT EINEM VORBESTIMMTEN ROHRDURCHMESSER, ROHR, SOWIE ROHRLEITUNGSSYSTEM**
METHOD FOR PRODUCING A NUMBER OF PIPES HAVING A PREDEFINED PIPE DIAMETER, PIPE, AND PIPING SYSTEM
PROCÉDÉ POUR LA FABRICATION D'UN CERTAIN NOMBRE DE TUBES PRÉSENTANT UN DIAMÈTRE PRÉDÉFINI, TUBE, AINSI QUE SYSTÈME DE CONDUITE

(30) Priorität: 27.06.2018 DE 102018115533
(43) Veröffentlichungstag der Anmeldung: 05.05.2021
(73) Patentinhaber: Minimax Viking Patent Management GmbH, 23840 Bad Oldesloe (DE)
(72) Erfinder: RÖNPAGEL, Andreas, 23840 Bad Oldesloe (DE); EHLERS, Jan, 23840 Bad Oldesloe (DE); SCHÜTT, Jendrik, 23840 Bad Oldesloe (DE); DIEDERLEY, Hanjo, 23840 Bad Oldesloe (DE); ZEUGNER, Kai, 23840 Bad Oldesloe (DE)
(74) Vertreter: Eisenführ Speiser
(86) Internationale Anmeldenummer: PCT/EP2019/067140
(87) Internationale Veröffentlichungsnummer: WO 2020/002498

(56) Entgegenhaltungen:
- EP-A1- 0 344 896
- EP-A1- 2 623 163
- EP-B1- 2 766 653
- DE-B1- 1 627 629
- US-A- 4 132 339
- US-A1- 2003 091 395
- US-A1- 2018 031 152

## Beschreibung

Die vorliegende Erfindung betrifft ein Verfahren zum Herstellen einer Anzahl von Rohren mit einem vorbestimmten Rohrdurchmesser. Insbesondere betrifft die Erfindung ein Verfahren zur Herstellung einer Anzahl von polymerveredelten Rohren mit einem vorbestimmten Rohrdurchmesser. Die Erfindung betrifft des Weiteren ein insbesondere in einem solchen Verfahren hergestelltes Rohr sowie ein Rohrleitungssystem einer Feuerlöschanlage mit einer Anzahl solcher Rohre.

Rohre sind ein zentraler Bestandteil von Feuerlöschanlagen. Es werden nicht selten mehrere Kilometer lange Rohrleitungen in Objekten installiert, um Sprinkler, Löschdüsen, und dergleichen im Brandfall mit Löschmittel versorgen zu können.

Verfahren zum Herstellen von Rohrleitungen für Feuerlöschanlagen sind allgemein bekannt. Rohre in Feuerlöschanlagen sind der besonderen Herausforderung ausgesetzt, dass sie über sehr lange Zeiträume ungenutzt in Objekten installiert sind, und im Einsatzfall zuverlässig die ihnen zukommende Aufgabe des Fluidtransports gewährleisten müssen.

Weit verbreitet sind etwa Feuerlöschanlagen, bei denen die Rohrleitungssysteme auch im Bereitschaftszustand Löschflüssigkeit führen und alternativ solche, die im Bereitschaftszustand in den Sprinklerleitungen noch keine Löschflüssigkeit führen. Insbesondere bei den letztgenannten Systemen ist die Korrosionsanfälligkeit im Inneren der Rohre eine besondere Herausforderung, weswegen im Stand der Technik Bemühungen unternommen worden sind, die Korrosionsbeständigkeit von Rohren bzw. Rohrleitungselementen insbesondere für Feuerlöschanlagen zu senken. Um die Problematik von Korrosion innerhalb von Feuerlöschanlagen zu umgehen, haben sich alternative Ansätze entwickelt, in denen große Teile des Rohrleitungssystems, und mit ihnen überwiegende Mengen der verbauten Rohre im Bereitschaftszustand nicht mit Löschfluid gefüllt sind, sondern mit Gasen.

Die EP2623163A1 zeigt eine Feuerlöschanlage welche aus einem Rohrsystem besteht.

Die Kosten für die Systeme aus dem Stand der Technik sind bisweilen beträchtlich, da einerseits die Verwendung korrosionsresistenter Rohre oder aufwendige Passivierungsverfahren notwendig waren, und zum anderen hohe Installationskosten für das Einfüllen von Gas in die jeweiligen Rohrleitungssysteme notwendig war.

In EP 1 2153 964 und EP 2 766 653 sind jeweils Systeme und Verfahren beschrieben, die gegenüber dem Stand der Technik eine deutliche Verbesserung erzielen. Dort wird erstmalig die Verwendung einer Polymerveredelung mittels Autodeposition auf der Rohrinnenseite bei Rohrleitungselementen von Feuerlöschanlagen beschrieben. Die dort beschriebene Polymerveredelung ist durch die erzielte ionische Bindung eines polymerbasierten Beschichtungsmaterials an der Rohroberfläche äußerst robust und ermöglicht es, einfache, per se noch nicht korrosionsbeständige Metalle, insbesondere niedriglegierte Stahlsorten, zu verwenden. Gleichzeitig wird selbst über längere Beobachtungszeiträume sehr geringe Korrosionsentwicklung bis hin vollständiger Korrosionsbeständigkeit erreicht.

Des Weiteren wird an die Rohre insbesondere von Feuerlöschanlagen die Anforderung gestellt, dem transportierten Fluid, beispielsweise Löschmittel, möglichst geringen Strömungswiderstand entgegenzusetzen. Dazu muss die innere Oberfläche der Rohre möglichst glatt sein, was zugleich wiederum auch der Korrosionsbeständigkeit zugutekommt. Aus den vorgenannten Gründen kommt der Fertigung insbesondere Feuerlöschanlagen große Bedeutung zu. Zugleich ist es ein Bestreben der Industrie, die Herstellung von Rohren wirtschaftlich effizient zu betreiben, wodurch man sich gerade mit Hinblick auf geforderte Korrosionsbeständigkeit in einen Zielkonflikt begibt.

Die oft kilometerlangen Rohrleitungssysteme benötigen für eine praxisgerechte Installation am jeweiligen Einsatzort eine individuelle Bereitstellung von Rohren mit unterschiedlichen Rohrlängen und unterschiedlichen Rohrdurchmessern. Um es möglichst weitgehend überflüssig zu machen, am Installationsort der Rohrleitungen die Rohre noch auf ihre designierte Rohrlänge zu bringen, wird hoher Aufwand in die Vorab-Planung des Rohrleitungssystems gesteckt.

In bekannten Verfahren zur Herstellung von Rohren werden als Ausgangsmaterial Rohrteile mit vorbestimmten Längen bereitgestellt. Die Rohleitungssysteme wurden dann aus den Rohren mit Standardlänge zusammengestückelt. An den Stellen wo punktuell kürzere Rohrteile benötigt wurden als die Rohrteile in Standardlänge, wurden die Rohrteile ausgehend von den Standardlängen-Rohrteilen auf die designierten Längen eingekürzt, und die übrigbleibenden Versatzstücke beziehungsweise Rohrreste als Verschnitt aussortiert. Wenn als beispielsweise für die Installation eines Rohrleitungssystems einer Feuerlöschanlage insgesamt zehn Rohrteile mit einer jeweiligen Länge von fünf Metern benötigt wurden, während die Standardrohrlänge beispielsweise sechs Meter oder mehr beträgt, so wurden jeweils von zehn Standard-Rohrteilen ein Meter oder mehr an Verschnitt erzeugt.

US 4,132,339 A zeigt ferner ein Verfahren zum Herstellen von Rohrsträngen aus einzelnen Rohrabschnitten verschiedener Länge, wobei die Rohrabschnitte durch Stoßverbinden miteinander zu einem Rohrstrang verschweißt werden. Vor dem eigentlichen Herstellen des Rohrstrangs wird zunächst ein Modell I eines Referenzrohrstranges erzeugt, dessen Gesamtlänge der genauen Länge des herzustellenden Rohrstrangs entspricht. Entlang des Referenzrohrstranges werden dann Verbotszonen für Stoßverbindungen markiert. Anschließend wird ein theoretisches Modell II eines Rohrstrangs durch beliebiges Aneinanderreihen realer Längen von verfügbaren Rohrabschnitten erzeugt, die zuvor hinsichtlich ihrer Längen vermessen wurden. Dabei überschreitet die Gesamtlänge des Modells II die des Referenzrohrstranges I. Anschließend wird das theoretische Modell II des Rohrstrangs mit dem Modell I des Referenzrohrstrangs verglichen und durch Verschieben des Modells II gegenüber dem Modell I eine Anordnung ermittelt, in der alle Stoßverbindungen außerhalb der Verbotszonen liegen und verbleibende Reststücke zur Vermeidung von Abfall so gering wie möglich sind.

Die bekannten Lösungen werden aus gesamtwirtschaftlichen Erwägungsgründen insgesamt als nachteilig empfunden.

Demzufolge lag der Erfindung die Aufgabe zugrunde, ein Verfahren der eingangs bezeichneten Art anzugeben, welches eine wirtschaftlichere Herstellung von Rohren mit einem vorbestimmten Rohrdurchmesser erlaubt, insbesondere von Rohren für Rohrleitungssysteme von Feuerlöschanlagen.

Die Erfindung löst die ihr zugrundeliegende Aufgabe bei einem solchen Verfahren, indem das Verfahren die Schritte umfasst:
- Zuführen von mehreren Rohrteilen mit dem vorbestimmten Rohrdurchmesser zu einer Schweißstation,
- Ausrichten jeweils eines ersten Rohrteils und eines zweiten Rohrteils koaxial zueinander und axial zueinander benachbart,
- Verschweißen der Rohrteile mittels einer vollständig umlaufenden Schweißnaht zu einem Rohrstrang,
- Fördern des Rohrstrangs zu einer Schneidestation in einer Maschinenrichtung stromabwärts der Schweißstation, und
- Abtrennen der Anzahl von Rohren in einer jeweils designierten Länge von dem Rohrstrang.

Es erscheint zunächst gegenintuitiv, mehrere Rohrteile zunächst mittels Verschweißen stoffschlüssig zu verbinden, wenn sie im Nachgang sofort wieder aufgetrennt werden, weil die dergestalt bearbeiteten Rohre nach ihrem Abtrennen vom Rohrstrang in vielen Fällen auf der Innenseite die umlaufende Wurzel der Schweißnaht aufweisen werden, was basierend auf den Erkenntnissen des Standes der Technik eine Verschlechterung des Strömungswiderstandes erwarten ließ und daher als nicht erstrebenswert galt. Die Erfinder haben allerdings überraschend festgestellt, dass der Strömungswiderstand dann nicht unzulässig hoch beeinträchtigt wird, wenn sich die Wurzel der Schweißnaht vollständig umlaufend im Inneren der Rohrleitung ausbildet, weil durch die Wurzel der Schweißnaht ein vergleichsweise sanfter Konturübergang von einem Rohrteil zum nächsten Rohrteil geschaffen wird. Ferner macht sich die Materialeinsparung drastisch bemerkbar. Wurde, um das vorstehend aus dem Stand der Technik beschriebene Zahlenbeispiel zu bemühen, beispielsweise bei der Erzeugung von zehn Rohren à fünf Meter Länge aus zehn Rohren à sechs Meter Länge ein Verschnitt von insgesamt zehnmal ein Meter, also zehn Meter Rohrlänge erzeugt, ist das Verfahren gemäß der Erfindung deutlich materialsparender: Es werden nicht zehn Rohre benötigt, sondern nur neun Rohre, die zu einem 54m langen Rohrstrang veschweißt werden, von welchem wiederum 10 Stück à jeweils 5m Länge abgetrennt werden können, so dass nur ein Stück von 4m Länge als "Verschnitt" übrig bleibt. in diesem Fall verschnittlos. Die Erfindung beruht auf dem Ansatz, dass an der Schweißstation durch serielles Aneinanderfügen von Rohrteilen zunächst ein virtuell endloser Rohrstrang erzeugt wird. Von diesem Rohrstrang können sodann in der stromabwärts anschließenden Schneidestation Rohre in beliebigen Längen abgetrennt werden, ohne jeweils einen Verschnitt zu erzeugen. Die Erfindung beruht ferner auch auf der Erkenntnis, dass die hierdurch erreichten Vorteile, wie früher als Vorurteil empfundenen Nachteile des Einbringens der zusätzlichen Schweißnaht, bei weitem überwiegen.

Vorteilhafte Weiterbildungen ergeben sich aus den Unteransprüchen und den nachfolgenden Ausführungen.

Erfindungsgemäß ist vorgesehen, dass nach dem Abtrennen der Anzahl von Rohren ein Restrohrteil verbleibt, und das Verfahren den Schritt umfasst: - Überführen des Restrohrrohrteils in ein Pufferlager.

Dies ermöglicht es, dass selbst das als Verschnitt verbleibende Restrohrteil in späteren Verfahrensabläufen noch genutzt werden kann. Dadurch erlaubt das Verfahren eine im Wesentlichen verschnittfreie Verarbeitung der zugeführten Rohrteile.

Vorzugsweise werden die Rohrteile mit dem vorbestimmten Rohrdurchmesser in einem Rohrlager bereitgehalten und wenigstens eines der ersten und zweiten Rohrteile wird für das Verfahren aus einem Rohrlager zu der Schweißstation zugeführt. Weiter vorzugsweise umfasst das Verfahren den Schritt:
- Prüfen, ob in dem Pufferlager ein Restrohrteil des vorbestimmten Durchmessers verfügbar, und falls ja:
   - Zuführen eines Rohrteils aus dem Rohrlager und Zuführen des Restrohrteils aus dem Pufferlager zu der Schweißstation.

Besonders bevorzugt wird das erfindungsgemäße Verfahren batchbasiert ausgeführt, wobei ein Batchlauf eine signierte Anzahl von herzustellenden Rohren mit dem vorbestimmten Durchmesser umfasst, und das Verfahren ferner die Schritte umfasst:
- Bestimmen einer Gesamtlänge der designierten Anzahl von Rohren,
- Bestimmen einer Länge des Restrohrteils im Pufferlager, falls vorhanden, und
- Bestimmen einer benötigten Menge zuzuführender Rohrteile aus dem Rohrlager als:
   - Gesamtlänge der designierten Anzahl von Rohren abzüglich der Länge des Restrohrteils, geteilt durch die vordefinierte Rohrlänge der Rohre im Rohrlager.

Das erfindungsgemäße Verfahren wird dann besonders wirtschaftlich betrieben, wenn beispielsweise für eine geplante Feuerlöschanlage auf Basis eines vordefinierten Rohrleitungssystems berechnet wird, wie viel Rohre und in welchen designierten Längen für einen oder mehrere vorbestimmte Durchmesser benötigt werden. Sodann werden vorzugsweise sämtliche Rohre und ihre jeweiligen designierten Längen nach vorbestimmten Durchmessern gruppiert, und gruppenweise in Batchläufen hergestellt. Auf diese Weise kann im Wesentlichen verschnittfrei gearbeitet werden, weil auch nach Beendigung eines Auftrages noch im Pufferlager verbleibende Restrohrteile für spätere Folgeraufträge wiederverwendet werden können.

Die Erfindung ermöglicht mithin auch eine hochgradige Automatisierung des Fertigungsverfahrens.

In bevorzugten Ausgestaltungen des Verfahrens weisen die Rohrteile jeweils eine Wand auf, und die Wand weist jeweils eine umlaufende Kantenfläche auf, wobei der Schritt des Ausrichtens umfasst:
- Ausrichten der umlaufenden Kantenfläche des ersten Rohrteils und der umlaufenden Kantenfläche des zweiten Rohrteils aufeinander, und wobei der Schritt des Schweißens umfasst:
   - Schweißen des ersten Rohrteils an das zweite Rohrteil entlang der umlaufenden Kantenflächen, wobei eine vollständig umlaufende Schweißnaht erzeugt wird, die eine sich auf der Innenseite des Rohrstrangs erstreckende Wurzel aufweist.

Der Erfindung liegt diesbezüglich auch die Erkenntnis zugrunde, dass der Rohrstrang durch Anbringen einer Schweißnaht, welche sich vollständig umlaufend im Inneren des Rohrstrangs, d.h. im Kreis erstreckt, gegenüber dem Stand der Technik mittels der Schweißnahtwurzel eine vorteilhafte Oberflächengeometrie erzeugt wird, die ein vollständiges Benetzen der gesamten inneren Oberfläche des Rohrstrangs inklusive eines Übergangsbereichs vom ersten zum zweiten Rohrteil mit der polymerbasierten Schutzschicht ermöglicht. Die sich vollständig umlaufend erstreckende Wurzel der Schweißnaht sorgt für einen im Vergleich zum Stand der Technik deutlich sanfteren Konturübergang zwischen dem ersten und dem zweiten Rohrteil, so dass es hierdurch erst möglich wird, unter Verwendung der Polymerveredelung komplexere Rohrstränge bzw. Rohre als nur einteilige Rohre langfristig korrosionsfest zu machen. Der sanfte Konturübergang zwischen dem ersten und zweiten Hohlkörper bietet Vorteile für jegliche Art der Polymerveredelung, prädestiniert das Rohrleitungselement allerdings ganz besonders für die Polymerveredelung mittels Autodeposition, da die Strömungsverhältnisse im Rohrinneren infolge des sanften Konturübergangs weniger stark gestört werden. Unter dem Ausrichten der Kantenflächen aufeinander wird verstanden, dass die Kantenfläche des ersten Hohlkörpers und die Kantenfläche des zweiten Hohlkörpers derart relativ zueinander orientiert und beabstandet werden, dass die beiden Hohlkörper entlang der Kantenflächen miteinander verschweißt werden können.

Weiter vorzugsweise weisen die Kantenflächen des ersten und zweiten Rohrteils jeweils eine umlaufende Innenkante auf, und der Schritt des Schweißens umfasst: Ausbilden der Schweißnaht in einer Dicke, die beide Innenkannte vollständig erfasst, wobei die Wurzel der Schweißnaht von einer Innenseite der Wand des ersten und/oder zweiten Rohrteils um einen vorbestimmten Maximalwert radial nach innen vorsteht, wobei der vorbestimmte Maximalwert vorzugsweise das 0,7fache der Wandstärke der Hohlkörper oder weniger beträgt. Durch das auf diese Weise sichergestellte, allerdings nur leichte Hervorstehen der Schweißnaht in das Innere des Rohrstrangs bzw. Rohres kann auf einfache Weise sichergestellt werden, dass wirklich beide Kantenflächen vollständig erfasst worden sind, und keine Kavitäten oder Ähnliches nach dem Schweißen im Bereich der Innenkanten der Hohlkörper verbleiben. Durch Begrenzen der maximalen Höhe, um die die Schweißnaht nach innen vorsteht, wird sichergestellt, dass durch die Schweißnaht kein ungewünschter erhöhter Strömungswiderstand erzeugt wird, was den C-Faktor, also die reduzieren würde. Der C-Faktor berechnet sich nach allgemein bekannten Grundsätzen anhand der Hazen-Williams-Gleichung.

Weiter vorzugsweise umfasst der Schritt des Abtrennens:
- Erzeugen wenigstens einer der Kantenflächen des Restrohrteils mittels Schneiden, vorzugsweise mittels Plasmaschneiden. Insbesondere das Plasmaschneiden hat sich als hocheffiziente Möglichkeit erwiesen, die Kantenflächen an den Hohlkörpern zu erzeugen. Es sind präzise Schnitte mit hoher Geschwindigkeit und somit hoher Wirtschaftlichkeit möglich. Plasmaschneiden eignet sich ferner für eine Automatisierung des Fertigungsprozesses.

In einer weiteren bevorzugten Ausführungsform umfasst das Verfahren den Schritt:
- Säubern wenigstens einer der umlaufenden Kantenflächen, vorzugsweise sämtlicher umlaufender Kantenflächen der zu verschweißenden Rohrteile, vor dem Schweißen, vorzugsweise nach dem Schneiden. Das Säubern der Kantenflächen umfasst insbesondere das Entfernen von Graten und losen Partikeln, aber auch von Verschmutzungen. Falls das vorgelagerte Schneiden der Kantenflächen mittels Plasmaschneiden erfolgt ist, hat sich hierdurch mitunter eine Metalloxidschicht im Bereich der Kantenfläche ausgebildet. Es ist im Rahmen der Erfindung erkannt worden, dass das Säubern der Kantenfläche und insbesondere das Entfernen von Metalloxiden von der Oberfläche der Rohrteile im Bereich der Kantenflächen zu einem sehr viel gleichmäßigeren Schweißbild führt und eine gleichmäßigere Ausprägung der Wurzel der Schweißnaht im Inneren des Rohrstrangs bzw. Rohres zur Folge hat. Vorteilhaft ist an dieser Ausführungsform ferner, dass sowohl das Säubern der Kantenflächen mit geringem Aufwand automatisierbar ist, insbesondere wenn es mit einer rotatorisch angetriebenen Bürste ausgeführt wird. Zum anderen erlaubt das Säubern der Kantenflächen per se auch einen automatisierten Schweißvorgang, da dieser angesichts der gesäuberten und von Metalloxiden befreiten Kantenflächen deutlich leichter beherrschbar ist.

Weiter vorzugsweise umfasst der Schritt des Säuberns das Entfernen von Metalloxiden und losen Partikeln von der wenigstens einen Kantenfläche, vorzugsweise mittels Bürsten.

In einer weiteren bevorzugten Ausführungsform ist das Verfahren ein Verfahren zur Herstellung einer designierten Anzahl polymerveredelter Rohre, umfassend den Schritt:
- Aufbringen einer polymerbasierten Schicht auf der Innenseite der Rohre, wobei die polymerbasierte Schicht die Innenseite der Rohre und die Wurzel der Schweißnaht vollständig bedeckt.

Das Aufbringen der polymerbasierten Schicht erfolgt in dem erfindungsgemäßen Verfahren vorzugsweise mittels Eintauchens der Rohre in ein Tauchbad, das ein entsprechendes Beschichtungsmaterial enthält. Der Vorteil eines Tauchbeschichtungsverfahrens liegt darin, dass zusätzlich zu einer Beschichtung des besonders sensiblen Innenbereichs der Rohrleitungselemente auch die äußere Oberfläche zumindest weitgehend im selben Beschichtungsvorgang beschichtet wird.

Vorzugsweise sind die Rohrteile aus einem zur chemischen Autodeposition geeigneten Metall ausgebildet, insbesondere aus einem eisenhaltigen und/oder zinkhaltigen Metall ausgebildet, und der Schritt des Aufbringens der Polymerschicht auf der Innenseite des Rohrs umfasst: Beschichten, insbesondere mittels chemischer Autodeposition, vorzugsweise mittels Eintauchen des Rohres in eine Tauchbad, das ein chemisches Autodepositionsmaterial auf Polymerbasis enthält.

Ein Vorteil der Anwendung eines Autodepositionsverfahrens liegt unter anderem darin, dass eine gleichmäßige, sehr korrosionsbeständige Beschichtung mit gleichzeitig geringen Schichtstärken erreicht wird. Eine Beschichtung kann sich insbesondere bei Anwendung eines Tauchverfahrens überall dort bilden, wo das Rohrleitungselement benetzt wird. Hier kommt wiederum der erfindungsgemäße Vorteil der optimierten Schweißnähte zum Tragen, weil durch die vollständige, gleichmäßige Ausbildung der Schweißnaht in den vorstehend beschriebenen bevorzugten Ausführungsformen Kavitäten, und dergleichen weitestgehend vermieden werden. Ein weiterer Vorteil ist darin zu sehen, dass infolge der Autodepositionsschicht und dem von ihr ausgehenden Korrosionsschutz dünnere Rohrwandstärken möglich werden, die bislang aufgrund einer Gefahr des Durchrostens ausgeschlossen waren. Kleinere Wandstärken wiederum haben den Vorteil, dass die von den Schweißnähten eingenommenen Flächenabschnitte im Rohrinneren weiter minimiert werden können, und dass insgesamt weniger Material aufgeschweißt werden muss.

Das Autodepositionsmaterial enthält vorzugsweise polymere Bestandteile, welche ionisch an der Wand der Hohlkörper und an der Wurzel der Schweißnaht gebunden werden, und liegt vorzugsweise als wässrige Emulsion oder Dispersion vor.

Das Autodepositionsmaterial ist in seiner Flüssigphase vorzugsweise sauer, besonders bevorzugt weist es einen pH-Wert in einem Bereich von 1 bis 5 auf, und besonders bevorzugt ein Startermaterial in Form von Metallhalogeniden. Als Metallhalogenide werden für eisenhaltige Metalle insbesondere Eisenhalogenide vorgeschlagen, besonders bevorzugt Eisen(III)fluorid. Die Metallhalogenide setzen mittels Reaktion an der Oberfläche der Rohrteile Metallionen, im Falle eines eisenhaltigen Rohrteils also insbesondere Eisenionen, insbesondere Fe²⁺-Ionen frei, welche, die polymeren Bestandteile im Autodepositionsmaterial destabilisieren, infolgedessen es zu einer Anlagerung an der Metalloberfläche der Schweißnaht und der Rohrteile kommt.

Das Autodepositionsmaterial weist als polymeren Bestandteil vorzugsweise autodepositionierbare Polymere auf, vorzugsweise ausgewählt aus der Liste bestehend aus:
i) Epoxiden,
ii) Acrylaten,
iii) Styroacrylaten,
iv) Epoxyacrylaten,
v) Isocyanaten, insbesondere Urethanen, wie etwa Polyurethanen,
vi) Polymere mit Vinylgruppe, beispielsweise Polyvinylidenchlorid, oder
iv) eine Kombination aus zwei oder mehr von i), ii) oder iii), die vorzugsweise miteinander querverbunden sind, weiter vorzugsweise über ein Isocyanat, besonders bevorzugt über ein Urethan.

Der Schritt des Eintauchens in das Autodepositionsmaterial erfolgt vorzugsweise in einem oder mehreren Tauchgängen und wird so lange fortgesetzt, bis die an der Innenseite des Rohrs angebrachte polymerbasierte Schicht eine Dicke in einem Bereich von 7 µm bis 80 µm aufweist, vorzugsweise eine Dicke in einem Bereich von 7 µm bis 30 µm. Die vorgenannten Werte beziehen sich auf die Trockenschichtdicke und insbesondere auf eine Dickenzunahme relativ zum unbeschichteten Zustand. Es hat sich herausgestellt, dass auch Schichtdicken in einem Bereich ab 7 µm mit dem erfindungsgemäßen Verfahren derart aufgebracht werden können, dass eine vollständige Bedeckung der inneren Oberfläche des Rohrleitungselements erfolgt, sowie eines Großteils der äußeren Oberfläche, sofern entsprechend eingetaucht.

Die Erfindung wurde vorstehend unter Bezugnahme auf das erfindungsgemäße Verfahren in einem ersten Aspekt beschrieben. Ferner ist ein Rohr offenbart, hergestellt in einem Verfahren nach einer der vorstehend beschriebenen bevorzugten Ausführungsformen, welches aufweist:
- ein erstes Rohrteil,
- ein zweites Rohrteil, wobei die Rohrteile koaxial zueinander ausgerichtet und mittels einer umlaufenden Schweißnaht verbunden sind, wobei die Schweißnaht eine sich auf der Innenseite des Rohrs erstreckende Wurzel aufweist, und vorzugsweise eine polymerbasierte Schicht auf der Innenseite des Rohrs, wobei die polymerbasierte Schicht die Innenseite des Rohres und die Wurzel der Schweißnaht vollständig bedeckt. Das erfindungsgemäße Rohr macht sich die Vorteile und bevorzugten Ausführungsformen des erfindungsgemäßen Verfahrens in vollem Umfang zu eigen, weswegen zur Vermeidung von Wiederholungen auf die obigen Ausführungen verwiesen wird.

Die Wurzel der Schweißnaht erfasst vorzugsweise die vor dem Schweißen beider Rohrteile noch vorhandenen Kantenflächen vollständig, und steht von einer Innenseite der Wand des ersten und/oder zweiten Rohrteils um einen vorbestimmten Maximalwert radial nach innen vor, wobei der vorbestimmte Maximalwert vorzugsweise das 0,7-fache der Wandstärke der Hohlkörper oder weniger beträgt.

Die Rohrteile sind vorzugsweise aus einem zur chemischen Autodeposition geeigneten Metall ausgebildet, insbesondere aus einem eisenhaltigen und/oder zinkhaltigen Metall ausgebildet, und die polymerbasierte Schicht enthält einen metallischen Bestandteil, vorzugsweise in Form von Metallionen, bei einem eisenhaltigen Metall also besonders bevorzugt in Form von Eisenionen. Die zwischen den polymeren Bestandteilen eingesperrten Eisenionen sorgen für eine starke Anhaftung des Beschichtungsmaterials an den Rohrteilen.

Das Autodepositionsmaterial weist als polymeren Bestandteil vorzugsweise autodepositionierbare Polymere auf, vorzugsweise ausgewählt aus der Liste bestehend aus:
i) Epoxiden,
ii) Acrylaten,
iii) Styroacrylaten,
iv) Epoxyacrylaten,
v) Isocyanaten, insbesondere Urethanen, wie etwa Polyurethanen,
vi) Polymere mit Vinylgruppe, beispielsweise Polyvinylidenchlorid, oder
iv) eine Kombination aus zwei oder mehr von i), ii) oder iii), die vorzugsweise miteinander querverbunden sind, weiter vorzugsweise über ein Isocyanat, besonders bevorzugt über ein Urethan.

Weiter vorzugsweise weist die polymerbasierte Schicht eine Dicke in einem Bereich von 7 µm bis 80 µm aufweist, vorzugsweise eine Dicke in einem Bereich von 7 µm bis 30 µm.

Der vorbestimmte Durchmesser der hergestellten Rohre und dafür verwendeten Rohrteile liegt vorzugsweise in einem Bereich von DN15 bis DN300, vorzugsweise von DN32 bis DN 80. Alternativ liegen die Nennweitenbereiche im Zoll-System in einem Bereich von ½" (NPS) bis 12" (NPS), besonders bevorzugt in einem Bereich von 1 ¼" (NPS) bis 3" (NPS).

Das vorstehend beschriebene erfindungsgemäß hergestellte Rohr wird in einem Rohrleitungssystem einer Feuerlöschanlage verwendet, welche eine Anzahl von Rohren aufweist, die miteinander gekoppelt sind, wobei eines, mehrere oder sämtliche Rohre nach einer der vorstehend beschriebenen bevorzugten Ausführungsformen ausgebildet sind. Die Erfindung betrifft demzufolge in weiteren Aspekten sowohl ein Rohrleitungssystem einer Feuerlöschanlage, mit einer Anzahl von Rohren, die miteinander gekoppelt sind, wie auch eine Verwendung eines Rohrs in einem Rohrleitungssystem einer Feuerlöschanlage, in der eine Anzahl von Rohren miteinander gekoppelt werden, wobei jeweils eines, mehrere oder sämtliche Rohre nach einer der vorstehend beschriebenen bevorzugten Ausführungsformen ausgebildet ist bzw. sind.

Die Erfindung wird im Folgenden unter Bezugnahme auf die beigefügten Figuren anhand bevorzugter Ausführungsbeispiele näher beschrieben. Hierbei zeigen:
- Figur 1: Ein schematisches Layout einer Anlage zum Ausführen des Verfahrens gemäß der vorliegenden Erfindung,
- Figur 2: ein schematisches Fließbild des erfindungsgemäßen Verfahrens gemäß einem bevorzugten Ausführungsbeispiel,
- Figur 3: ein weiteres schematisches Fließbild des erfindungsgemäßen Verfahrens gemäß Figur 2, und
- Figur 4: eine schematische Teildarstellung eines Rohres gemäß einem bevorzugten Ausführungsbeispiel.

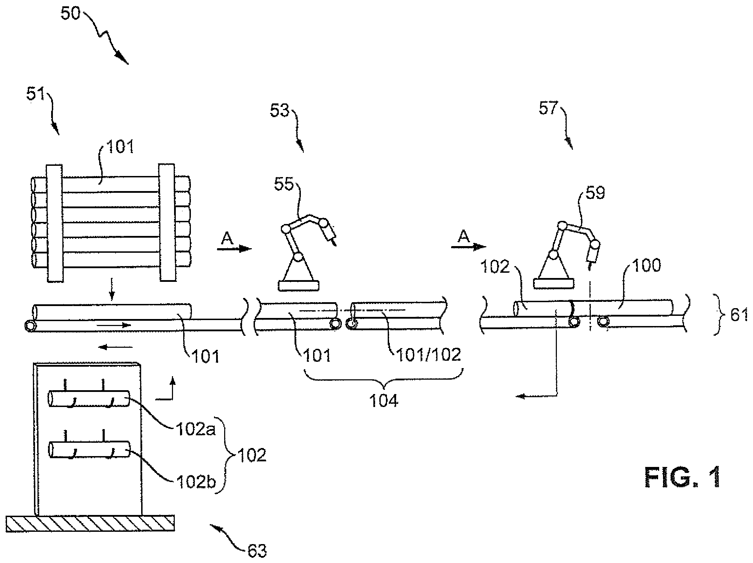

Figur 1 zeigt eine Anlage 50 zum Herstellen zum von Rohren mit vorbestimmten Durchmesser und jeweils designierten Rohrlängen. Die Anlage 50 weist ein Rohrlager 51 auf, in dem eine Vielzahl von Rohrteilen 101 mit einer Standardlänge von beispielsweise 6m bevorratet sind.

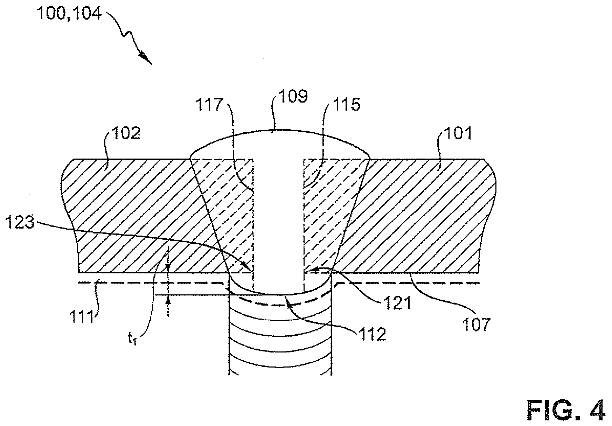

Ferner weist die Anlage eine Schweißstation 53 auf. Die Schweißstation weist wenigstens ein Schweißwerkzeug 55 auf, das auf, der dazu eingerichtet ist, ihm zugeführte Rohrteile 101, 102 miteinander zu verschweißen, so dass eine vollständig umlaufende Schweißnaht 109 (vgl. Fig. 4) entsteht, die die benachbarten Rohrteile 101, 102 derart miteinander verbindet, dass eine Wurzel (112) der Schweißnaht auf der Innenseite der Rohrteile 101, 102 ausgebildet wird.

Die Schweißstation 53 ist dazu eingerichtet, aus den einzelnen, ihr zugeführten Rohrteilen 101, 102 einen virtuell endlosen Rohrstrang 104 zu bilden. Das Schweißwerkzeug 55 kann in bevorzugten Ausführungsformen manuell bedienbar, teilautomatisiert oder vollautomatisiert ausgebildet werden.

Die Anlage 50 weist ferner eine Schneidestation 57 auf. Die Schneidestation 57 weist ein Trennwerkzeug 59 auf, beispielsweise eine Vorrichtung zum Plasmaschneiden. Die Schneidestation 57 ist dazu eingerichtet, mittels des Trennwerkzeugs 59 von dem ihr zugeführten Rohrstrang 104 Rohre 100 in jeweils designierter Länge abzutrennen.

Die Anlage 50 weist ferner eine Förderstrecke 61 auf, die dazu eingerichtet ist, die Rohrteile 101, 102 in einer Maschinenrichtung A von dem Rohrlager 51 aus Stromabwärts zunächst zur Schweißstation 53, und sodann zur Schneidestation 57 zu fördern. Die Förderstrecke 61 kann hierbei als singuläre Einrichtung oder als Kombination mehrerer miteinander kooperierender Einrichtungen ausgebildet sein. Beispielsweise werden die Rohrteile 101, 102 beziehungsweise Rohrstränge 104 und Rohre 100 mittels Gurtförderern oder ähnlichem transportiert.

Die Anlage 50 weist ferner ein Pufferlager 63 auf. Das Pufferlager 63 ist dazu eingerichtet, Restrohrteile 102 temporär aufzunehmen, die nach dem Abtrennen einer für einen Auftrag erforderlichen Anzahl Rohre 100 von dem Rohrstrang 104 übrigbleiben.

Wenn mit der Anlage 50 eine Anzahl von Rohren 100 mit einem vorbestimmten Durchmesser produziert werden soll, so können die im Pufferlager befindlichen Restrohrteile 102 von dort entnommen und der Förderstrecke 61 stromaufwärts der Schweißstation 53 zugeführt werden, um gemeinsam mit dem im Rohrlager befindlichen Rohrteilen 101 zu einem Rohrstrang verschweißt zu werden.

Weist das Pufferlager 63 keine Restrohrteile 102 in dem vorbestimmten Rohrdurchmesser auf, kann der Rohrstrang auch ausschließlich mit Rohren 101 aus dem Rohrlager 51 gebildet werden.

Das Pufferlager 63 ist vorzugsweise dazu eingerichtet, Restrohrteile 102a, 102b unterschiedlicher Rohrdurchmesser aufzunehmen.

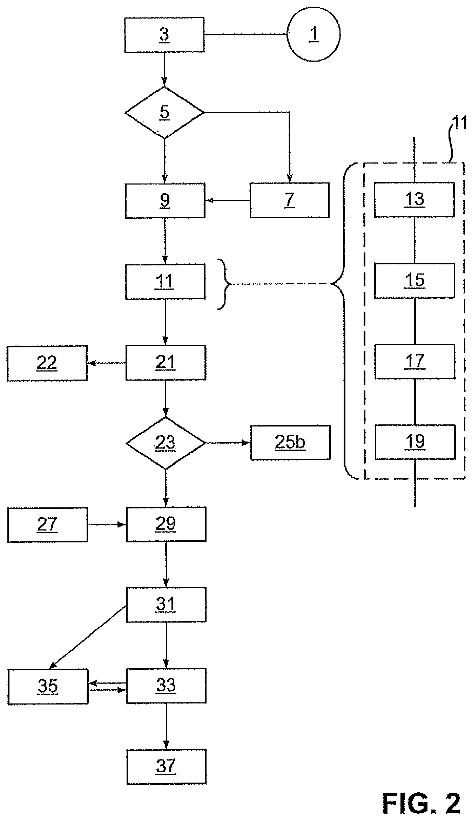

In Figur 2 ist der grundsätzliche Verfahrensablauf des erfindungsgemäßen Verfahrens gemäß einem bevorzugten Ausführungsbeispiel gezeigt.

In einem ersten Schritt 1 wird zunächst ein Auftrag erteilt, eine vorbestimmte Anzahl von Rohren 100 mit einem vorbestimmten Durchmesser herzustellen. Jedes der herzustellenden Rohre 100 weist eine designierte Länge auf, die von Rohr zu Rohr unterschiedlich sein kann oder aber auch identisch sein kann.

Nach Erhalt des Auftrags wird optional in einem nächsten Verfahrensschritt 3 ermittelt, wie groß die Gesamtlänge aller herzustellenden Rohre 100 ist, und wie viele Rohrteile 101 aus dem Rohrlager 51 zur Erledigung des Auftrags erledigt werden.

Falls in dem Pufferlager 63 noch ein Restrohrteil 102 vorhanden ist, wird dieses zur Erledigung des Auftrags mit einbezogen. Eine etwaige Erledigung des Auftrags noch verbleibendes Restrohrteil wird schließlich dem Pufferlager 63 wieder zugeführt.

Sofern eine rechnergestützte Auftragsplanung verwendet wird, die den Rohmaterialbedarf kalkuliert, und sofern in einem anschließenden Verfahrensschritt 5 ermittelt wird, dass in dem Pufferlager 63 noch ein oder mehrere Restrohrteile 102 des vorbestimmten Rohrdurchmessers vorrätig sind, kann die im Pufferlager 3 verfügbare Länge der Restrohrteile von der benötigten Gesamtlänge abgezogen werden. Das Ergebnis geteilt durch die Länge der im Rohrlager 51 befindlichen Rohrteile 101 ergibt dann die Anzahl der aus dem Rohrlager 101 benötigten Rohrteile 101.

Wenn in dem Verfahrensschritt 5 ermittelt wird, dass im Pufferlager 63 ein oder mehrere Restrohrteile 102 des vorbestimmten Durchmessers verfügbar sind, werden diese in einem nächsten Verfahrensschritt 7 der Förderstrecke 61 zugeführt.

Zusätzlich werden nacheinander die benötigten Rohrteile 101 aus dem Rohrlager 51 in einem Verfahrensschritt 9 der Förderstrecke 61 zugeführt. Falls im Pufferlager 63 keine Restrohrteile 102 des vorbestimmten Durchmessers verfügbar ist, wird der Bedarf an Rohrteilen für den erteilten Auftrag ausschließlich mit Rohrteilen 101 aus dem Rohrlager 51 gedeckt. Die Rohrteile 101 und gegebenenfalls Restrohrteile 102 werden in einem nächsten Schritt 11 der Schweißstation 53 zugeführt und miteinander verschweißt.

Nach dem Schweißen wird der durch das Schweißen erzeugte Rohrstrang 104 der Schneidestation 55 zugeführt, und in einem nächsten Verfahrensschritt 21 werden die Rohre 101 in den benötigten jeweils designierten Längen von dem Rohrstrang 104 abgetrennt. Sofern nach dem Abtrennen der benötigten Anzahl Rohre 100 ein Restrohrteil 102 verbleibt, wird dieser in einem nächsten Verfahrensschritt 22 dem Pufferlager 63 zugeführt.

Nach dem Abtrennen wird in einem Auswahlschritt 23 festgelegt, ob die abgetrennten Rohre 100 unmittelbar zur Oberflächenveredelung weitergeleitet werden können, oder ob zunächst weitere Schweißschritte, insbesondere das Anbringen von Anschweißteilen an die Rohre, erfolgen sollen. Falls die Rohre ohne Anschweißteile weiterverarbeitet werden sollen, werden sie nach dem Abtrennen aus Schritt 21 von der Förderstrecke 63 entnommen und in einem nächsten Verfahrensschritt 29 für die Oberflächenveredelung vorbereitet.

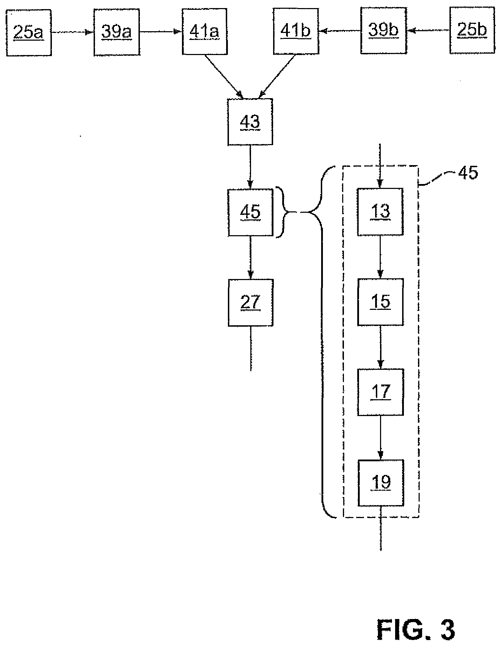

Falls die Auswahl getroffen wird, dass die abgetrennten Rohre 100 zusätzlich noch durch Anbringen von weiteren Anschweißteilen weiterbearbeitet werden sollen, werden diese als zweite Hohlkörper einem Verfahrensschritt 25b zugeführt, vgl. Figur 3.

In Figur 3 ist das zusätzliche Anbringen von Anschweißteilen an die Rohre 100 schematisch dargestellt. Zunächst werden in den Schritten 25a, 25b ein erster Hohlkörper, beispielsweise ein Rohrstutzen zur Aufnahme eines Sprinklers, und ein aus dem Rohrstrang 104 erzeugtes Rohr 100 als ein zweiter Hohlkörper bereitgestellt. Im Anschluss daran werden in einem nächsten Verfahrensschritt 39a, b Kantenflächen an den Hohlkörpern vorgesehen, vorzugsweise mittels Plasmaschneiden. Die Hohlkörper erhalten in den Schritten 39a, b entweder Kantenflächen an einer oder beiden ihrer Stirnseiten oder an einem von den jeweiligen Stirnseiten beabstandeten Wandabschnitt, letzteres in Form eines Ausschnitts.

In einem anschließenden Verfahrensschritt 41a, b werden der erste und zweite Hohlkörper an den Kantenflächen gesäubert, vorzugsweise mittels einer rotatorisch angetriebenen Bürste. Sollte im vorhergehenden Schritt zum Erzeugen der Kantenflächen Plasmaschneiden zum Einsatz gekommen sein, werden durch das Bürsten entstandene Metalloxide und lose Partikel sowie Grate möglichst weitgehend entfernt.

In einem nächsten Verfahrensschritt 43 werden der erste Hohlkörper und der zweite Hohlkörper so zueinander ausgerichtet, dass jeweils eine Kantenfläche des einen Hohlkörpers möglichst nah benachbart zu einer korrespondierenden Kantenfläche des jeweils anderen Hohlkörpers ausgerichtet und angeordnet wird. Das Ausrichten der Hohlkörper zueinander kann manuell oder mittels ein- oder mehrgelenkiger Roboter erfolgen.

In einem nächsten Verfahrensschritt 45 werden die zuvor ausgerichteten Hohlkörper entlang der aufeinander ausgerichteten umlaufenden Kantenflächen miteinander verschweißt, sodass eine vollständig umlaufende Schweißnaht erzeugt wird, die eine sich auf der Innenseite des Rohres erstreckende Wurzel aufweist. Vorzugsweise wird eine einlagige Schweißnaht angebracht.

Im Anschluss an das Schweißen werden die miteinander verschweißten Hohlkörper als Rohre mit Anschweißteilen in einem Verfahrensschritt 27 wieder dem Verfahrensgang zugeführt, den auch die Rohre 100 ohne Anschweißteile durchlaufen.

In einem Verfahrensschritt 29, der wiederum mehrere, nicht näher dargestellte Unterschritte aufweisen kann, werden die Rohre 100 für das nachfolgende Beschichten vorbereitet. Die Vorbereitung umfasst das Reinigen der Rohre in einem oder mehreren Tauchbädern, in denen beispielsweise Beize oder Spülmedien wie etwa entmineralisiertes Wasser vorgehalten werden können. Die genaue Anzahl und Anordnung der Vorbereitungsschritte richtet sich nach den Spezifikationen des zu verwendenden Beschichtungsmaterials.

Die in Schritt 29 vorbereiteten Hohlkörper werden in einem nächsten Verfahrensschritt 31 sodann in einem oder mehreren Tauchgängen mittels eines Autodepositionsverfahrens chemisch beschichtet. Durch das Eintauchen wird erreicht, dass die vollständige Innenseite inklusive der Schweißnaht, aber auch die Außenseite der Hohlkörper im Wesentlichen vollständig beschichtet wird.

Im Nachgang zum Beschichten der Hohlkörper und der Schweißnaht mit der polymerbasierten Schicht findet eine thermische Nachbehandlung in einem Schritt 33 statt. Der Schritt 33 kann einen oder mehrere Unterschritte umfassen, in denen jeweils ein Flash-Off, oder ein Tempern mit vorbestimmten Temperaturen und Temperdauern erfolgt (Niedrigtempern oder Hochtempern). Optional können die so beschichteten und nachbehandelten Rohre, die aus den Rohrteilen erzeugt wurden, in einem Schritt 35 pulverbeschichtet werden. Auch die Pulverbeschichtung wird vorzugsweise in einem Trocknungsverfahren in Schritt 33 erneut ausgehärtet.

Im Anschluss daran wird in Schritt 37 das Rohr aus dem Herstellungsprozess ausgeführt und liegt einsatzbereit vor.

Der Verfahrensschritt 33 zur thermischen Nachbehandlung der Rohre ist der Einfachheit halber als ein singulärer Schritt abgebildet. Es können aber in Schritt 33 mehrere aufeinanderfolgende Wärmebehandlungsstufen erfolgen, die in einer oder in mehreren verschiedenen Einrichtungen vorgenommen werden.

Die Schweißverfahren gemäß den Schritten 11, 45 kann beispielsweise dadurch optimiert werden, dass in einem Messschritt 13, der zeitlich zu einem beliebigen Zeitpunkt zwischen den Schritten 7, 9 bzw. 25a,b und dem jeweiligen Schweißschritt 11, 45 vorgenommen werden kann, die Durchmesser der Rohrteile und die Wandstärken der Rohrteile insbesondere im Bereich der Kantenflächen vermessen werden.

Optional erfolgt online eine Vermessung, beispielsweise optisch mittels Spalterkennung, unmittelbar beim Verfahrensschritt der Kantenflächenerzeugung, und auf Basis der gemessenen Größen dann eine Anpassung der Schweißparameter zur Kompensation etwaig festgestellter Abweichungen der gemessenen Geometrie von der Ausgangsgeometrie, für die die ursprünglichen Schweißparameter hinterlegt waren. Dies ermöglicht, im Schweißvorgang selbst die Auswirkungen der Abweichungen, beispielsweise etwaige Unrundheiten des Hohlkörpers, zu kompensieren.

In Abhängigkeit der gemessenen Parameter wird vorzugsweise in einem Verfahrensschritt 15 aus einer vordefinierten Wertetabelle ein Parametersatz zum optimalen Anbringen der Schweißnaht ausgewählt. Die Parameter, die in der vordefinierten Wertetabelle für jeden Durchmesser und jede Wandstärke abgelegt sind, umfassen vorzugsweise die Vorschubgeschwindigkeit, das Material des Schweißzusatzes, die Schweißart. Wird als Schweißart beispielsweise das Lichtbogenschweißen ausgewählt, zählen zu den Parametern des Schweißwerkzeugs 55 weiterhin die Spannung, die Förderrate des Schweißdrahts, etc.

In einem darauffolgenden Schritt 17 werden vorzugsweise die zuvor ermittelten Parameter in das Schweißwerkzeug eingelesen oder, sofern manuell geschweißt werden soll, dem Bediener bereitgestellt, damit im darauffolgenden Schritt 19 das Verschweißen des ersten und zweiten Hohlkörpers miteinander stattfinden kann.

In Figur 4 ist ein Rohr 100 oder wahlweise ein Teil des Rohrstrangs 104 im Bereich der in der Schweißstation 51 erzeugten umlaufenden Schweißnaht 109 dargestellt. Die Rohrteile 101 und 102 sind koaxial zueinander und axial zueinander benachbart angeordnet. Die Rohrteile 101 und 102 weisen im nichtverschweißten Zustand jeweils eine dem anderen Rohrteil zugewandte Kantenfläche 115, 117 auf. Nach dem Erfindungsgemäßen Anbringen der Schweißnaht 109 erstreckt sich eine Wurzel 112 der Schweißnaht 109 umlaufend vollständig im Kreis innerhalb des Rohrstrangs 104 beziehungsweise Rohres 100.

Die Kantenflächen 115, 117 werden im nichtverschweißten Zustand noch jeweils von einer umlaufenden Innenkante 121, 123 begrenzt. Die umlaufenden Innenkanten 121, 123 sind im verschweißten Zustand von der Wurzel 112 der Schweißnaht 109 vollständig erfasst. Anstelle eines kantigen, scharfen Übergangs zwischen den Rohrteilen 101, 102 bildet nun die Wurzel 112 der Schweißnaht einen vergleichsweise sanften Übergang aus. Die Wurzel 112 der Schweißnaht 109 steht hierbei um einen vorbestimmten Maximalwert t₁ radial innerhalb der Wand 107 des Rohres 100 beziehungsweise Rohrstrangs 104 vor. Der Betrag, um den die Wurzel 112 nach innen vorsteht, wird bestimmt aus dem Rohrdurchmesser der Rohrteile 101, 102, der Materialstärke der Wand 107, und den Schweißparametern des Schweißwerkzeugs 55.

Im Rahmen von Vorversuchen wird für den vorbestimmten Rohrdurchmesser ermittelt, mit welchen Schweißparametern sich die Wurzel 112 in der gewünschten Tiefe t₁ ausbilden lässt, siehe oben. Je nachdem, welcher Rohrdurchmesser für den jeweils vorliegenden Auftrag vorliegt, wird der geeignete Parametersatz aus der vorab bestimmten Liste ausgewählt und das Schweißverfahren hiermit durchgeführt. Das Vorgehen ist dabei grundsätzlich dasselbe, egal ob das Schweißen automatisiert, teilautomatisiert oder manuell erfolgt.

Ferner ist in Figur 4 mit Bezugszeichen 111 die auf der Innenseite des Rohres 100 am Verfahrensende aufgebrachte polymerbasierte Schutzschicht gezeigt, welche die vorstehend im allgemeinen Teil beschriebenen Eigenschaften aufweist. Im Inneren des Rohrs 100 weist das Rohr 100 eine polymerbasierte Schicht 111 auf, die sich vollständig entlang der Innenseiten der Hohlkörper 101, 102 erstreckt und auch die umlaufende Schweißnaht 109 auf der Innenseite des Rohrs 100 jedenfalls vollständig bedeckt. Sofern das Rohr in einem Tauchverfahren beschichtet wurde, ist auch die äußere Oberfläche der ersten und zweiten Hohlkörper 101, 102 sowie der Schweißnaht 109 zumindest weitestgehend von der polymerbasierten Schicht bedeckt.

## Patentansprüche

1. Verfahren zur Herstellung einer Anzahl von Rohren (100) mit einem vorbestimmten Rohrdurchmesser, umfassend die Schritte:
- Zuführen von mehreren Rohrteilen (101, 102) mit dem vorbestimmten Rohrdurchmesser zu einer Schweißstation (53),
- Ausrichten jeweils eines ersten Rohrteils (101) und eines zweiten Rohrteils (102) koaxial zueinander und axial zueinander benachbart,
- Verschweißen der Rohrteile (101, 102) mittels einer vollständig umlaufenden Schweißnaht (109) zu einem Rohrstrang (104), und
- Fördern des Rohrstrangs (104) zu einer Schneidestation (57) in einer Maschinenrichtung (A) stromabwärts der Schweißstation (53),
**gekennzeichnet durch**,
- Abtrennen der Anzahl von Rohren (100) in einer jeweils designierten Länge von dem Rohrstrang (104), wobei nach dem Abtrennen der Anzahl von Rohren ein Restrohrteil (102) verbleibt, und das Verfahren den Schritt umfasst:
- Überführen des Restrohrteils (102) in ein Pufferlager (63).

2. Verfahren nach Anspruch 1,
wobei wenigstens eines der ersten und zweiten Rohrteile (101) aus einem Rohrlager (51) zu der Schweißstation (53) geführt wird, wobei vorzugsweise das Verfahren den Schritt umfasst:
- Prüfen, ob in dem Pufferlager (63) ein Restrohrteil (102) des vorbestimmten Durchmessers verfügbar ist, und
- falls ja: Zuführen eines Rohrteils (101) aus dem Rohrlager (51) und Zuführen des Restrohrteils (102) aus dem Pufferlager (63) zu der Schweißstation (53).

3. Verfahren nach Anspruch 2,
wobei das Verfahren batchbasiert ausgeführt wird, wobei ein Batchlauf eine designierte Anzahl von herzustellenden Rohren (100) umfasst, und das Verfahren umfasst:
- Bestimmen einer Gesamtlänge der designierten Anzahl von Rohren (100),
- Bestimmen einer Länge des Restrohrteils (102) im Pufferlager (63), falls vorhanden, und
- Bestimmen einer benötigten Menge zuzuführender Rohrteile (101) aus dem Rohrlager (51) als:
Gesamtlänge der designierten Anzahl von Rohren abzüglich der Länge des Restrohrteils, geteilt durch die vordefinierte Rohrlänge der Rohre im Rohrlager.

4. Verfahren nach einem der vorstehenden Ansprüche,
wobei die Rohrteile (101, 102) jeweils eine Wand (107) aufweisen, und die Wand (107) jeweils eine umlaufende Kantenfläche (115, 117) aufweist, der Schritt des Ausrichtens umfasst:
- Ausrichten der umlaufenden Kantenfläche (115) des ersten Rohrteils (101) und der umlaufenden Kantenfläche (117) des zweiten Rohrteils (102) aufeinander, und der Schritt des Schweißens umfasst:
- Schweißen des ersten Rohrteils (101) an das zweite Rohrteil (102) entlang der umlaufenden Kantenflächen (115, 117), wobei eine vollständig umlaufende Schweißnaht (109) erzeugt wird, die eine sich auf der Innenseite des Rohrstrangs (104) erstreckende Wurzel (112) aufweist.

5. Verfahren nach Anspruch 4,
wobei die Kantenflächen (115, 117) des ersten und des zweiten Rohrteils (101, 102) jeweils eine umlaufende Innenkante (121, 123) aufweisen, und der Schritt des Schweißens umfasst:
- Ausbilden der Wurzel (112) der Schweißnaht (109) in einer Dicke, die beide Innenkanten (115, 117), vollständig erfasst,
wobei die Wurzel (112) der Schweißnaht (109) von einer Innenseite der Wand des ersten und/oder zweiten Rohrteils um einen vorbestimmten Maximalwert (t₁) radial nach innen vorsteht, wobei der vorbestimmte Maximalwert vorzugsweise das 0,7fache der Wandstärke der Rohrteile oder weniger beträgt.

6. Verfahren nach einem der vorstehenden Ansprüche,
wobei der Schritt des Abtrennens umfasst:
Erzeugen wenigstens einer der Kantenflächen (117) des Restrohrteils (102) mittels Schneiden, vorzugsweise mittels Plasmaschneiden.

7. Verfahren nach einem der Ansprüche 4 bis 6,
ferner umfassend den Schritt:
Säubern der Kantenfläche (115, 117) vor dem Schweißen, vorzugsweise nach dem Schneiden, wobei vorzugsweise
der Schritt des Säuberns das Entfernen von Metalloxiden und losen Partikeln von der wenigstens einen Kantenfläche (115,117) umfasst, vorzugsweise mittels Bürsten.

8. Verfahren nach einem der vorstehenden Ansprüche,
wobei das Verfahren ein Verfahren zur Herstellung einer designierten Anzahl polymerveredelter Rohre ist, umfassend den Schritt:
- Aufbringen einer polymerbasierten Schicht (111) auf der Innenseite der Rohre, wobei die polymerbasierte Schicht die Innenseite der Rohre und die Wurzel der Schweißnaht vollständig bedeckt,
wobei vorzugsweise das Aufbringen der polymerbasierten Schicht mittels Eintauchen des Rohrleitungselements in ein Tauchbad erfolgt, das ein entsprechendes Beschichtungsmaterial enthält.

9. Verfahren nach einem der vorstehenden Ansprüche,
wobei die Rohrteile aus einem zur chemischen Autodeposition geeigneten Metall, insbesondere einem eisenhaltigen und/oder zinkhaltigen Metall ausgebildet sind, und der Schritt des Aufbringens der Polymerschicht auf der Innenseite des Rohrs (100) umfasst:
Beschichten, insbesondere mittels chemischer Autodeposition, vorzugsweise mittels Eintauchen des Rohrs (100) in ein Tauchbad, das ein chemisches Autodepositionsmaterial auf Polymerbasis enthält,
wobei vorzugsweise das Autodepositionsmaterial polymere Bestandteile enthält, welche ionisch an der Wand der Hohlkörper und an der Wurzel (112) der Schweißnaht (109) gebunden werden, und vorzugsweise als wässrige Emulsion oder Dispersion vorliegt,
wobei weiter vorzugsweise das Autodepositionsmaterial sauer ist, vorzugsweise einen pH-Wert in einem Bereich von 1 bis 5 aufweist, und vorzugsweise ein Startermaterial in Form von Metallhalogeniden umfasst, insbesondere Eisenhalogeniden, besonders bevorzugt Eisen(III)fluorid, mittels derer die polymeren Bestandteile destabilisiert werden.

10. Verfahren nach Anspruch 9,
wobei das Autodepositionsmaterial als polymeren Bestandteil autodepositionierbare Polymere aufweist, vorzugsweise ausgewählt aus der Liste bestehend aus:
i) Epoxiden,
ii) Acrylaten,
iii) Styroacrylaten,
iv) Epoxyacrylaten,
v) Isocyanaten, insbesondere Urethanen, wie etwa Polyurethanen,
vi) Polymere mit Vinylgruppe, beispielsweise Polyvinylidenchlorid, oder
iv) eine Kombination aus zwei oder mehr von i), ii) oder iii), die vorzugsweise miteinander querverbunden sind, weiter vorzugsweise über ein Isocyanat, besonders bevorzugt über ein Urethan.

11. Verfahren nach einem der Ansprüche 9 oder 10,
wobei der Schritt des Eintauchens in einem oder mehreren Tauchgängen erfolgt und solange fortgesetzt wird, bis die an der Innenseite des Rohrs (100) angebrachte polymerbasierte Schicht eine Dicke in einem Bereich von 7 µm bis 80 µm aufweist, vorzugsweise eine Dicke in einem Bereich von 7 µm bis 30 µm aufweist.

12. Rohrleitungssystem einer Feuerlöschanlage, mit
einer Anzahl von Rohren (100), die miteinander gekoppelt sind,
**dadurch gekennzeichnet, dass** eines, mehrere oder sämtliche Rohre gemäß einem Verfahren nach einem der vorstehenden Ansprüche hergestellt ist/sind, wobei das Rohr(100)
- ein erstes Rohrteil (101), und
- ein zweites Rohrteil (102) aufweist,
wobei die Rohrteile (101, 102) koaxial zueinander ausgerichtet, und mittels einer umlaufenden Schweißnaht (109) verbunden sind,
wobei die Schweißnaht (109) eine sich auf der Innenseite des Rohrs (100) erstreckende Wurzel (112) aufweist, und vorzugsweise
- eine polymerbasierte Schicht (111) auf der Innenseite des Rohrs, wobei die polymerbasierte Schicht (111) die Innenseite des Rohrs (100) und die Wurzel der Schweißnaht (109) vollständig bedeckt.

13. Verwendung eines Rohrs in einem Rohrleitungssystem einer Feuerlöschanlage, in der eine Anzahl von Rohren miteinander gekoppelt werden,
**dadurch gekennzeichnet, dass** eines, mehrere oder sämtliche der Rohre gemäß einem Verfahren nach einem der vorstehenden Ansprüche hergestellt ist/sind, wobei das Rohr(100)
- ein erstes Rohrteil (101), und
- ein zweites Rohrteil (102) aufweist,
wobei die Rohrteile (101, 102) koaxial zueinander ausgerichtet, und mittels einer umlaufenden Schweißnaht (109) verbunden sind,
wobei die Schweißnaht (109) eine sich auf der Innenseite des Rohrs (100) erstreckende Wurzel (112) aufweist, und vorzugsweise
- eine polymerbasierte Schicht (111) auf der Innenseite des Rohrs, wobei die polymerbasierte Schicht (111) die Innenseite des Rohrs (100) und die Wurzel der Schweißnaht (109) vollständig bedeckt.

## Claims

1. A method for producing a number of pipes (100) with a predetermined pipe diameter, comprising the steps:
- feeding multiple pipe parts (101, 102) with the predetermined pipe diameter to a welding station (53),
- aligning in each case a first pipe part (101) and a second pipe part (102) coaxially with respect to one another and axially adjacent to one another,
- welding the pipe parts (101, 102) by means of a fully encircling weld seam (109) to form a pipe run (104), and
- conveying the pipe run (104) to a cutting station (57) in a machine direction (A) downstream of the welding station (53),
**characterized by**
- cutting off the number of pipes (100) in a respectively designated length from the pipe run (104), wherein after the cutting-off of the number of pipes, a residual pipe part (102) remains, and the method comprises the step:
- transferring the residual pipe part (102) into a buffer store (63).

2. The method as claimed in claim 1,
wherein at least one of the first and second pipe parts (101) is guided from a pipe store (51) to the welding station (53), wherein preferably the method comprises the step:
- checking whether a residual pipe part (102) of the predetermined diameter is available in the buffer store (63), and
- if so: feeding a pipe part (101) from the pipe store (51) and feeding the residual pipe part (102) from the buffer store (63) to the welding station (53).

3. The method as claimed in claim 2,
wherein the method is carried out in batch-based fashion, wherein a batch run comprises a designated number of pipes (100) to be produced, and the method comprises:
- determining a total length of the designated number of pipes (100),
- determining a length of the residual pipe part (102) in the buffer store (63), if present, and
- determining a required quantity of pipe parts (101) to be fed from the pipe store (51) as:
total length of the designated number of pipes minus the length of the residual pipe part, divided by the predefined pipe length of the pipes in the pipe store.

4. The method as claimed in any of the preceding claims,
wherein the pipe parts (101, 102) each have a wall (107), and the wall (107) has in each case an encircling edge surface (115, 117), and the aligning step comprises:
- aligning the encircling edge surface (115) of the first pipe part (101) and the encircling edge surface (117) of the second pipe part (102) with one another, and the welding step comprises:
- welding the first pipe part (101) to the second pipe part (102) along the encircling edge surfaces (115, 117), wherein a fully encircling weld seam (109) is generated which has a root (112) extending on the inside of the pipe run (104).

5. The method as claimed in claim 4,
wherein the edge surfaces (115, 117) of the first and of the second pipe part (101, 102) have in each case an encircling inner edge (121, 123), and the welding step comprises:
- forming the root (112) of the weld seam (109) with a thickness that completely encompasses both inner edges (115, 117),
wherein the root (112) of the weld seam (109) protrudes radially inward from an inside of the wall of the first and/or second pipe part by a predetermined maximum value (t₁), wherein the predetermined maximum value preferably amounts to 0.7 times the wall thickness of the pipe parts or less.

6. The method as claimed in any of the preceding claims,
wherein the cutting-off step comprises:
generating at least one of the edge surfaces (117) of the residual pipe part (102) by means of cutting, preferably by means of plasma cutting.

7. The method as claimed in any of claims 4 to 6,
furthermore comprising the step:
cleaning the edge surface (115, 117) before the welding, preferably after the cutting, wherein preferably the cleaning step comprises removing metal oxides and loose particles from the at least one edge surface (115, 117), preferably by brushing.

8. The method as claimed in any of the preceding claims,
wherein the method is a method for producing a designated number of polymer-enhanced pipes, comprising the step:
- applying a polymer-based layer (111) on the inside of the pipes, wherein the polymer-based layer completely covers the inside of the pipes and the root of the weld seam, wherein preferably the application of the polymer-based layer is performed by dipping of the pipeline element into a dip bath which contains a corresponding coating material.

9. The method as claimed in any of the preceding claims,
wherein the pipe parts are formed from a metal suitable for chemical autodeposition, in particular a ferrous and/or zinc-containing metal, and the step of applying the polymer layer on the inside of the pipe (100) comprises:
coating, in particular by means of chemical autodeposition, preferably by dipping of the pipe (100) into a dip bath which contains a polymer-based chemical autodeposition material,
wherein preferably the autodeposition material comprises polymer constituents which are ionically bonded to the wall of the hollow bodies and to the root (112) of the weld seam (109), and is preferably present as an aqueous emulsion or dispersion,
wherein further preferably the autodeposition material is acidic, preferably has a pH in a range from 1 to 5, and preferably comprises a starter material in the form of metal halides, in particular iron halides, particularly preferably iron(III) fluoride, by means of which the polymer constituents are destabilized.

10. The method as claimed in claim 9,
wherein the autodeposition material has, as polymer constituent, autodepositionable polymers preferably selected from the list comprising:
i) epoxides,
ii) acrylates,
iii) styrene acrylates,
iv) epoxy acrylates,
v) isocyanates, especially urethanes, such as polyurethanes,
vi) polymers with a vinyl group, for example polyvinylidene chloride, or
iv) a combination of two or more of i), ii) or iii), which are preferably crosslinked to one another, more preferably via an isocyanate, particularly preferably via a urethane.

11. The method as claimed in any of claims 9 or 10,
wherein the dipping step is performed in one or more dipping processes and is continued until such time as the polymer-based layer applied to the inside of the pipe (100) has a thickness in a range from 7 µm to 80 µm, preferably a thickness in a range from 7 µm to 30 µm.

12. A pipeline system of a fire extinguishing installation, having
a number of pipes (100) which are coupled to one another,
**characterized in that** one, multiple or all pipes is/are produced according to a method as claimed in any of the preceding claims, wherein the pipe (100) comprises:
- a first pipe part (101),
- a second pipe part (102),
wherein the pipe parts (101, 102) are aligned coaxially with respect to one another and connected by means of an encircling weld seam (109),
wherein the weld seam (109) has a root (112) extending on the inside of the pipe (100), and preferably
- a polymer-based layer (111) on the inside of the pipe, wherein the polymer-based layer (111) completely covers the inside of the pipe (100) and the root of the weld seam (109).

13. The use of a pipe in a pipeline system of a fire extinguishing installation, in which a number of pipes are coupled to one another,
**characterized in that** one, multiple or all pipes is or are produced according to a method as claimed in any of the preceding claims, wherein the pipe (100) having:
- a first pipe part (101),
- a second pipe part (102),
wherein the pipe parts (101, 102) are aligned coaxially with respect to one another and connected by means of an encircling weld seam (109),
wherein the weld seam (109) has a root (112) extending on the inside of the pipe (100), and preferably
- a polymer-based layer (111) on the inside of the pipe, wherein the polymer-based layer (111) completely covers the inside of the pipe (100) and the root of the weld seam (109).

## Revendications

1. Procédé de fabrication d'un certain nombre de tubes (100) avec un diamètre de tube prédéfini, comprenant les étapes :
- d'amenée de plusieurs parties de tube (101, 102) avec le diamètre de tube prédéfini à une station de soudage (53),
- d'alignement respectivement d'une première partie de tube (101) et d'une deuxième partie de tube (102) coaxialement l'une par rapport à l'autre et de manière axialement adjacente l'une par rapport à l'autre,
- de soudage des parties de tube (101, 102) au moyen d'un cordon de soudure (109) entièrement périphérique en une ligne de tubes (104), et
- de convoyage de la ligne de tubes (104) vers une station de découpe (57) dans une direction machine (A) en aval de la station de soudage (53), **caractérisé par**,
- le découpage du certain nombre de tubes (100) dans une longueur respectivement désignée de la ligne de tubes (104), dans lequel une partie de tube restante (102) reste après le découpage du certain nombre de tubes, et le procédé comprend l'étape :
- de transfert de la partie restante du tube (102) dans un palier tampon (63).

2. Procédé selon la revendication 1,
dans lequel au moins une des première et deuxième parties de tube (101) est guidée depuis un palier de tube (51) vers la station de soudage (53), dans lequel le procédé comprend de préférence l'étape :
- de vérification si une partie de tube restante (102) du diamètre prédéfini est disponible dans le palier tampon (63), et
- si oui : d'amenée d'une partie de tube (101) depuis le palier de tube (51) et d'amenée de la partie de tube restante (102) depuis le palier tampon (63) à la station de soudage (53).

3. Procédé selon la revendication 2,
dans lequel le procédé est exécuté sur la base d'un lot, dans lequel un cycle de lot comprend un nombre désigné de tubes (100) à fabriquer, et le procédé comprend :
- la définition d'une longueur totale du nombre désigné de tubes (100),
- la définition d'une longueur de la partie de tube restante (102) dans le palier tampon (63), le cas échéant, et
- la définition d'une quantité nécessaire de parties de tube (101) à amener depuis le palier de tube (51) comme :
la longueur totale du nombre de tubes désigné moins la longueur de la partie de tube restante, divisée par la longueur de tube prédéfinie des tubes dans le palier de tubes.

4. Procédé selon l'une quelconque des revendications précédentes,
dans lequel les parties de tube (101, 102) présentent chacune une paroi (107), et la paroi (107) présente respectivement une surface de bord périphérique (115, 117), l'étape de l'alignement comprend :
- l'alignement de la surface de bord périphérique (115) de la première partie de tube (101) et de la surface de bord périphérique (117) de la deuxième partie de tube (102) l'une sur l'autre, et l'étape du soudage comprend :
- le soudage de la première partie de tube (101) à la deuxième partie de tube (102) le long des surfaces de bord périphériques (115, 117), dans lequel un cordon de soudure entièrement périphérique (109) est produit, qui présente une racine (112) s'étendant sur le côté intérieur de la ligne de tubes (104).

5. Procédé selon la revendication 4,
dans lequel les surfaces de bord (115, 117) de la première et de la deuxième partie de tube (101, 102) présentent chacune un bord intérieur périphérique (121, 123), et l'étape du soudage comprend :
- la réalisation de la racine (112) du cordon de soudure (109) dans une épaisseur qui englobe entièrement les deux bords intérieurs (115, 117),
dans lequel la racine (112) du cordon de soudure (109) fait saillie radialement vers l'intérieur d'une valeur maximale prédéfinie (t₁) depuis un côté intérieur de la paroi de la première et/ou de la deuxième partie de tube, dans lequel la valeur maximale prédéfinie est de préférence inférieure ou égale à 0,7 fois l'épaisseur de paroi des parties de tube.

6. Procédé selon l'une quelconque des revendications précédentes,
dans lequel l'étape du découpage comprend :
la production d'au moins une des surfaces de bord (117) de la partie de tube restante (102) par découpe, de préférence par découpe au plasma.

7. Procédé selon l'une quelconque des revendications 4 à 6,
comprenant en outre l'étape :
de nettoyage de la surface de bord (115, 117) avant le soudage, de préférence après la découpe, dans lequel de préférence
l'étape du nettoyage comprend l'élimination d'oxydes métalliques et de particules détachées de l'au moins une surface de bord (115, 117), de préférence par brossage.

8. Procédé selon l'une quelconque des revendications précédentes,
dans lequel le procédé est un procédé de fabrication d'un nombre désigné de tubes améliorés par un polymère, comprenant l'étape :
- d'application d'une couche à base de polymère (111) sur le côté intérieur des tubes, dans lequel la couche à base de polymère recouvre entièrement le côté intérieur des tubes et la racine du cordon de soudure,
dans lequel l'application de la couche à base de polymère s'effectue de préférence par immersion de l'élément de canalisation dans un bain d'immersion qui contient un matériau de revêtement correspondant.

9. Procédé selon l'une quelconque des revendications précédentes,
dans lequel les parties de tube sont réalisées à partir d'un métal adapté à l'autodéposition chimique, en particulier d'un métal contenant du fer et/ou contenant du zinc, et l'étape de l'application de la couche polymère sur le côté intérieur du tube (100) comprend :
le revêtement, en particulier par autodéposition chimique, de préférence par immersion du tube (100) dans un bain d'immersion qui contient un matériau d'autodéposition chimique à base de polymère,
dans lequel le matériau d'autodéposition contient de préférence des composants polymères qui sont liés ioniquement à la paroi des corps creux et à la racine (112) du cordon de soudure (109) et est présent de préférence sous forme d'émulsion ou de dispersion aqueuse, dans lequel le matériau d'autodéposition est par ailleurs de préférence acide, présente de préférence une valeur de pH dans une plage de 1 à 5, et comprend de préférence un matériau de départ sous forme d'halogénures de métaux, en particulier d'halogénures de fer, de manière particulièrement préférée de fluorure de fer (III), par lesquels les composants polymères sont déstabilisés.

10. Procédé selon la revendication 9,
dans lequel le matériau d'autodéposition présente, en tant que composant polymère, des polymères autodéposables, choisis de préférence dans la liste comprenant :
i) les époxydes,
ii) les acrylates,
iii) les acrylates de styrène,
iv) les époxyacrylates,
v) les isocyanates, en particulier les uréthanes, tels que les polyuréthanes,
vi) les polymères avec un groupe vinylique, par exemple le chlorure de polyvinylidène, ou
iv) une combinaison de deux ou plus parmi i), ii) ou iii), qui sont de préférence reliés transversalement entre eux, par ailleurs de préférence par un isocyanate, de manière particulièrement préférée par un uréthane.

11. Procédé selon l'une quelconque des revendications 9 ou 10,
dans lequel l'étape de l'immersion s'effectue en une ou plusieurs immersions et se poursuit jusqu'à ce que la couche à base de polymère appliquée sur le côté intérieur du tube (100) présente une épaisseur dans une plage de 7 µm à 80 µm, de préférence une épaisseur dans une plage de 7 µm à 30 µm.

12. Système de canalisations d'un système d'extinction d'incendie, avec
un certain nombre de tubes (100) qui sont couplés les uns aux autres,
**caractérisé en ce qu'**un, plusieurs ou tous les tubes sont fabriqués selon un procédé selon l'une quelconque des revendications précédentes, dans lequel le tube (100) présente
- une première partie de tube (101), et
- une deuxième partie de tube (102),
dans lequel les parties de tube (101, 102) sont alignées coaxialement les unes par rapport aux autres et sont reliées au moyen d'un cordon de soudure périphérique (109),
dans lequel le cordon de soudure (109) présente une racine (112) s'étendant sur le côté intérieur du tube (100), et de préférence
- une couche à base de polymère (111) sur le côté intérieur du tube, dans lequel la couche à base de polymère (111) recouvre entièrement le côté intérieur du tube (100) et la racine du cordon de soudure (109).

13. Utilisation d'un tube dans un système de canalisations d'un système d'extinction d'incendie, dans lequel un certain nombre de tubes sont couplés les uns aux autres,
**caractérisée en ce qu'**un, plusieurs ou tous les tubes sont fabriqués selon un procédé selon l'une quelconque des revendications précédentes, dans laquelle le tube (100) présente
- une première partie de tube (101), et
- une deuxième partie de tube (102),
dans laquelle les parties de tube (101, 102) sont alignées coaxialement les unes par rapport aux autres et sont reliées au moyen d'un cordon de soudure périphérique (109),
dans laquelle le cordon de soudure (109) présente une racine (112) s'étendant sur le côté intérieur du tube (100), et de préférence
- une couche à base de polymère (111) sur le côté intérieur du tube, dans lequel la couche à base de polymère (111) recouvre entièrement le côté intérieur du tube (100) et la racine du cordon de soudure (109).
